# EUROPÄISCHE PATENTSCHRIFT

(11) **EP 3 409 922 B1**
(45) Veröffentlichungstag und Bekanntmachung des Hinweises auf die Patenterteilung: **11.03.2020**
(21) Anmeldenummer: 18172291.9
(22) Anmeldetag: 15.05.2018
(51) Int. Cl.: B32B 3/26, B63B 17/00, F02B 77/11, F02B 77/13

(54) **ISOLIERVERKLEIDUNG**
INSULATING CLADDING
REVÊTEMENT ISOLANT

(30) Priorität: 17.05.2017 DE 102017110723
(43) Veröffentlichungstag der Anmeldung: 05.12.2018
(73) Patentinhaber: BDD Beteiligungs GmbH, 68169 Mannheim (DE)
(72) Erfinder: Baum, Armin, 64668 Rimbach (DE)
(74) Vertreter: Wesch, Arno

(56) Entgegenhaltungen:
- WO-A1-98/04438
- DE-B3-102006 018 090
- US-A- 3 829 150
- US-A- 5 271 142
- US-A1- 2011 139 542
- US-A1- 2012 180 753
- US-B1- 6 378 640

## Beschreibung

Die Erfindung betrifft eine Isolierverkleidung zum thermischen Isolieren von Maschinen- oder Motorteilen gemäß dem Oberbegriff des Patentanspruchs 1.

Isolierverkleidungen finden Verwendung, um beispielsweise Rohrleitungen, Motoren, Maschinen oder Motor- bzw. Maschinenteile so zu verkleiden, dass eine Gefährdung von Personen durch hohe Temperaturen, insbesondere in Motorräumen und Maschinenräumen, möglichst vermieden wird.

Vor diesem Hintergrund sind Standardisolierverkleidungen nach SOLAS (Internationales Übereinkommen von 1974 zum Schutz des menschlichen Lebens auf See) bekannt.

Aus dem Stand der Technik sind Isolierverkleidungen bekannt, bei welchen zwischen einem metallischen Außenmantelkörper und einem metallischen Innenmantelkörper eine oder mehrere Isolierungen sandwichartig aufgenommen ist bzw. sind.

Die genannten Isolierungen bestehen in der Regel aus Isoliermatten oder aus konfektionierten flexiblen Isolierformteilen. Die Isolierungen weisen temperaturbeständige technische Gewebe und Isoliermaterialien auf.

Durch die Isolierung wird bewirkt, dass die Temperatur des Außenmantelkörpers wesentlich geringer ist als die Temperatur des Innenmantelkörpers, der einem Maschinen- oder Motorteil zugewandt ist.

Der Außenmantelkörper und der Innenmantelkörper werden üblicherweise durch Umbördelungen, durch das Umbiegen von Laschen oder durch Nieten und Schweißen, so miteinander verbunden, dass diese einen Aufnahmeraum für die Isolierung ausbilden. Die Isolierung ist dann quasi zwischen dem Außenmantelkörper und dem Innenmantelkörper gekammert aufgenommen und häufig nicht leicht entnehmbar.

Vor diesem Hintergrund zeigen die US 2012/0180753 A1 und die US 5,271,142 A Isolierungen, bei denen eine Lage zwischen zwei vercrimpten Metalllagen angeordnet ist. Die US 6,378,640 B1 zeigt eine Fixierung einer Schallisolierung durch ein Federelement, die US2011/0139542 A1 durch stiftartige Befestiger, wie beispielsweise Schrauben. Die US 3,829,150 A zeigt schallisolierendes Material, das durch einen kraftschlüssig auf einem Gewindestift befestigten Kopf gehalten ist. Die WO 98/04438 A1 zeigt eine Isolierverkleidung, die durch einen doppelt-kegelstumpfartigen Kopf fixiert ist, der einen Durchbruch einer Wand durchgreift. Eine Motorhaubenverkleidung, die durch ein Clipelement befestigt ist, das ebenfalls einen Durchbruch durchgreift und in diesem verrastet ist, zeigt die DE 10 2006 018 090 B3.

Bei den Isolierungen handelt es sich jedoch in der Regel um Verschleißteile, die nach einer gewissen Betriebsdauer der Isolierverkleidung ausgetauscht werden müssen, damit diese ihre thermische Isolierfunktion noch gut erfüllen kann.

Um einen Austausch einer verbrauchten Isolierung vorzunehmen, müssen der Außenmantelkörper und der Innenmantelkörper in aufwendiger Weise auseinander gebaut werden.

Des Weiteren kann es notwendig sein, Maschinen oder Motoren abzuschalten, damit eine Isolierverkleidung abgenommen und geöffnet werden kann, um eine Isolierung zu entnehmen. Hiermit gehen Kosten und eine erhebliche Umrüst- oder Wartungszeit einher.

Der Erfindung liegt daher die Aufgabe zugrunde, eine Isolierung einer Isolierverkleidung zum thermischen Isolieren von Maschinen- oder Motorteilen möglichst problemlos und schnell auszutauschen.

Die vorliegende Erfindung löst die genannte Aufgabe durch die Merkmale des Patentanspruchs 1.

Erfindungsgemäß ist zunächst erkannt worden, dass eine Isolierverkleidung zum thermischen Isolieren von Maschinen- oder Motorteilen in geeigneter Weise mit einer Isolierung verbunden werden muss, um diese leicht wieder lösen zu können. Darauf ist erkannt worden, dass dies besonders leicht möglich ist, wenn die Isolierung reversibel und/ oder zerstörungsfrei lösbar an einem Mantelkörper befestigt ist. Hierdurch kann auf Spreiznieten bei der Fertigung von Isolierverkleidungen verzichtet werden. Es können Kosten bei der Fertigung eingespart werden. Eine Isolierverkleidung ist leicht wiederverwertbar und daher verschleißoptimiert ausgestaltet.

Erfindungsgemäß ist weiter erkannt worden, dass relativ dünne metallische und zugleich relativ starre Mantelkörper verwendet werden können, um mit diesen eine reversible Befestigung einer Isolierung zu realisieren. Durch die reversible und/ oder zerstörungsfreie Befestigung wird das Material der Isolierung geschont, da im Wesentlichen auf scharfe Kanten verzichtet werden kann.

Insbesondere ist ein Mantelkörper leicht an vorherrschende Temperaturen anpassbar, indem dieser mit einer geeigneten Isolierung nachgerüstet wird. Die Isolierung kann auch eine Dichtfunktion entfalten, wenn diese geeignet an oder in den Mantelkörper eingelegt wird.

Vor diesem Hintergrund ist denkbar, dass eine Isolierung unter Nutzung von Druckknöpfen, Magnetkräften oder ähnlichem reversibel an einem metallischen Mantelkörper festgelegt wird.

Es könnte kein Innenmantelkörper vorgesehen sein, der mit dem Mantelkörper verbunden ist und die Isolierung zwischen sich und dem Mantelkörper einschließt und/ oder aufnimmt. Hierdurch kann Metall und Gewicht eingespart werden. Eine solche Isolierverkleidung ist insbesondere bei Platzmangel gut verwendbar, da ein Innenmantelkörper entfällt. Des Weiteren sind keine aufwendigen Arbeitsschritte notwendig, um einen Außenmantelkörper mit einem Innenmantelkörper zu verbinden. Es ist nur ein einziger Mantelkörper vorgesehen. Ein solcher Mantelkörper kann an weitere angereiht werden, um eine größere Länge abzudecken.

Der inneren Oberfläche und/ oder der äußeren Oberfläche könnte bzw. könnten zumindest jeweils eine Isolierung zumindest abschnittsweise oder bereichsweise zugeordnet sein. Alternativ oder zugleich könnte bzw. könnten zumindest jeweils eine Isolierung zumindest abschnittsweise oder bereichsweise an der inneren Oberfläche und/ oder der äußeren Oberfläche anliegen. Je nach Anwendungsfall kann entweder an der inneren Oberfläche und/ oder an der äußeren Oberfläche eine Isolierung reversibel und leicht abnehmbar befestigt sein. Der Mantelkörper kann sogar sandwichartig zwischen zwei Isolierungen aufgenommen sein.

Der Mantelkörper könnte mit der Isolierung formschlüssig und/ oder kraftschlüssig verbindbar sein. Ein Formschluss kann schnell und leicht durch Druckknöpfe, Haken- und Ösen-Verbindungen, Klettverschlüsse oder ähnliche Verbindungen hergestellt und wieder gelöst werden, ohne die Isolierung zu schädigen. Ein Kraftschluss lässt sich ebenfalls leicht durch eine geeignete Ausformung des Mantelkörpers oder der Isolierung herstellen. Wesentlich ist nur, dass die Isolierung ausreichend fest am Mantelkörper haftet, um Vibrationen von thermisch zu isolierenden Maschinen oder Motoren Stand zu halten.

Am oder im Mantelkörper könnte ein erstes Formschlussmittel angeordnet sein, und an der Isolierung könnte ein zweites Formschlussmittel angeordnet sein, wobei das erste Formschlussmittel und das zweite Formschlussmittel mit einander einen reversibel lösbaren Formschluss eingehen. Hierdurch ist eine Isolierung einem bestimmten Mantelkörper eindeutig zuordenbar. Die Formschlussmittel können so gewählt werden, dass diese ausschließlich miteinander einen Formschluss eingehen. Nicht betriebsgerechte Montagen von Isolierungen an ungeeigneten Mantelkörpern können vermieden werden.

Am oder im Mantelkörper ist ein Unterteil oder ein Oberteil eines Druckknopfs angeordnet, und an der Isolierung ist ein Oberteil oder ein Unterteil eines Druckknopfs angeordnet, wobei ein Oberteil mit einem Unterteil einen reversibel lösbaren Formschluss eingeht. Druckknöpfe sind einfach zu bedienen und erfordern keine weiteren Werkzeuge zum Verbinden und Lösen einer Isolierung.

Ein Unterteil oder ein Oberteil des Druckknopfs könnte im Mantelkörper ausgebildet sein, wobei das Unterteil oder Oberteil in den Mantelkörper eingeprägt und/ oder eingeformt ist. Hierdurch ist ein teilearmer Aufbau des Mantelkörpers ermöglicht. Es ist unmöglich, dass ein Teil eines Druckknopfs, der am Mantelkörper vorhanden sein muss, verloren geht.

Vor diesem Hintergrund könnte ein Unterteil oder ein Oberteil des Druckknopfs an den Mantelkörper, nämlich an dessen innere Oberfläche und/ oder dessen äußere Oberfläche, angeschweißt sein. Eine Schweißverbindung lässt sich dauerhaft ausbilden und rasch durchführen. So können auch komplexer ausgeformte Druckknöpfe verwendet werden, die sich nicht so leicht in einen Mantelkörper einprägen lassen.

Das Unterteil oder das Oberteil könnte einen radial und/ oder axial auskragenden Schweißsockel aufweisen. Der Schweißsockel stellt ausreichend "Fleisch" zur Verfügung, um ein Unterteil oder Oberteil auf einem relativ dünnen metallischen Mantelkörper zu befestigen, ohne diesen durch das Schweißen zu schädigen.

Alternativ oder zugleich könnte das Unterteil oder das Oberteil einen Durchgang aufweisen, durch den ein Schweißpunkt im Inneren des Unterteils oder Oberteils zur Verbindung mit der inneren und/ oder äußeren Oberfläche erzeugbar ist. So kann mit einer Schweißelektrode in den Druckknopf eingefahren und ein Punktschweißen durchgeführt werden. Die sichtbare innere und/ oder äußere Oberfläche des Mantelkörpers bleibt von Schweißpunkten im Wesentlichen befreit und eben.

Zwischen der inneren und/ oder der äußeren Oberfläche des Mantelkörpers und der Isolierung könnte ein Luftpolster vorgesehen sein. Ein Luftpolster senkt die an der äußeren Oberfläche mess- und fühlbare Temperatur erheblich gegenüber der am Maschinen- oder Motorteil herrschenden Temperatur ab.

Bevorzugt ist der Mantelkörper aus einem Blech, insbesondere einem Stahlblech, gefertigt. Stahlbleche lassen sich leicht umformen, prägen und/ oder tiefziehen.

Ein Verfahren zur Herstellung einer Isolierverkleidung der hier beschriebenen Art umfasst die nachfolgenden Schritte:
- Bereitstellen einer metallischen Lage zur Fertigung des Mantelkörpers,
- Eindrücken eines Stempels in die innere und/ oder äußere Oberfläche des Mantelkörpers um durch Tiefziehen eine Struktur in den Mantelkörper einzuprägen, die einen Formschluss herstellen kann, oder
- Anschweißen eines Unterteils oder Oberteils eines Druckknopfs an die innere und/ oder äußere Oberfläche des Mantelkörpers.

Die hier beschriebene Isolierverkleidung kann verwendet werden, um Standardisolierverkleidungen nach SOLAS (Internationales Übereinkommen von 1974 zum Schutz des menschlichen Lebens auf See) zu ersetzen. Die Isolierverkleidung wird bevorzugt in der Hochtemperaturdämmung verwendet.

In der Zeichnung zeigen
- Fig. 1: eine Schnittansicht einer Isolierverkleidung, umfassend einen starren und metallischen Mantelkörper aus Blech, wobei der inneren Oberfläche des Blechs als Isolierung ein Isolierformteil zugeordnet ist, welches durch eine Druckknopfverbindung reversibel und zerstörungsfrei lösbar am Mantelkörper befestigt ist und wobei das Oberteil der Druckknopfverbindung als Kappe und das Unterteil am Blech als Niet ausgebildet sind,
- Fig. 2: eine schematische Ansicht einer Isolierverkleidung, bei welcher als Isolierung ein Isolierformteil oder Gewebelagen an der inneren Oberfläche anliegt bzw. anliegen,
- Fig. 3: eine schematische Ansicht einer Isolierverkleidung, bei welcher als Isolierung ein Isolierformteil oder Gewebelagen von der inneren Oberfläche bereichsweise beabstandet ist bzw. sind, um eine Be- und/oder Entlüftungskammer oder ein ruhendes Luftpolster zwischen dem Isolierformteil bzw. den Gewebelagen und der inneren Oberfläche des Mantelkörpers auszubilden,
- Fig. 4: eine schematische Ansicht einer Isolierverkleidung, bei welcher die Isolierung sehr eng an der inneren Oberfläche anliegt und das Blech des Mantelkörpers quasi mit der Isolierung innen beschichtet,
- Fig. 5: eine schematische Ansicht einer Isolierverkleidung, bei welcher die Isolierung von der inneren Oberfläche um einen Spalt definierter Breite bereichsweise beabstandet ist, um ein Luftpolster zwischen der Isolierung und der inneren Oberfläche auszubilden,
- Fig. 6: eine schematische Ansicht eines Schritts eines Fertigungsverfahrens, insbesondere eines Punktschweißverfahrens, bei dem eine Zentrierung eines Unterteils eines Druckknopfs am Mantelkörper über einen Zentrierstift erfolgt,
- Fig. 7: eine schematische Ansicht eines Schritts eines Fertigungsverfahrens, insbesondere eines Punktschweißverfahrens, bei dem eine Zentrierung eines Unterteils eines Druckknopfs am Mantelkörper über eine Zentrierwarze am Unterteil des Druckknopfs erfolgt,
- Fig. 8: eine schematische Ansicht eines Schritts eines Fertigungsverfahrens, insbesondere eines Punktschweißverfahrens, bei dem eine Zentrierung eines Unterteils eines Druckknopfs am Mantelkörper über eine Zentrierwarze am Mantelkörper erfolgt,
- Fig. 9: eine schematische Ansicht eines Mantelkörpers, in den das Unterteil eines Druckknopfs mittels einer Umformvorrichtung eingeformt bzw. eingedrückt ist,
- Fig. 10: eine schematische Ansicht einer Isolierkassette, bei welcher zwischen einer Isolierung und den inneren Oberflächen zweier Mantelkörper jeweils Luftpolster ausgebildet sind,
- Fig. 11: eine schematische Ansicht einer Isolierkassette, bei welcher an einem Mantelkörper sowohl an der inneren Oberfläche als auch an der äußeren Oberfläche jeweils eine Isolierung reversibel und zerstörungsfrei befestigt ist,
- Fig. 12: eine schematische Ansicht einer Anordnung, bei welcher der Mantelkörper als Zwischenblech dient und an seiner inneren Oberfläche mit einer Isolierung verbunden ist, wobei der Mantelkörper durch eine eingewölbte Sicke mit einer ausgewölbten Sicke eines Außenkörpers in Formschluss steht,
- Fig. 13: eine schematische Ansicht eines Schritts eines Fertigungsverfahrens, bei dem ein Mantelkörper zwischen einen Stempel und einen oberen Tisch einer Umformvorrichtung gelegt ist,
- Fig. 14: eine schematische Ansicht eines weiteren Schritts des Fertigungsverfahrens, bei dem der Mantelkörper gemäß Fig. 13 durch den Stempel in eine Ausnehmung des oberen Tischs gepresst und dadurch so verformt wird, dass dieser eine topfartige Vertiefung aufweist,
- Fig. 15: eine schematische Ansicht eines weiteren Schritts des Fertigungsverfahrens, bei dem die topfartige Vertiefung des Mantelkörpers gemäß Fig. 14 durch Gegenformen eines unteren Tischs an ihrem unteren Ende lateral aufgeweitet wird,
- Fig. 16: eine schematische Ansicht eines weiteren Schritts des Fertigungsverfahrens, bei dem der Mantelkörper gemäß Fig. 15 aus dem oberen Tisch durch Vergrößern der Ausnehmung des oberen Tischs unter Zuhilfenahme eines Auswerfers im unteren Tisch entnommen wird, und
- Fig. 17: eine Draufsicht auf einen Ausformring des oberen Tischs gemäß Fig. 16, bei dem Kreissegmente seitwärts und nach oben verfahrbar sind, um die kreisförmige Ausnehmung im oberen Tisch zu vergrößern, wobei die Kreissegmente durch eine Schwalbenschwanzführung relativ zum oberen Tisch geführt sind, die ausschnittsweise im unteren Teil der Fig. 17 dargestellt ist.

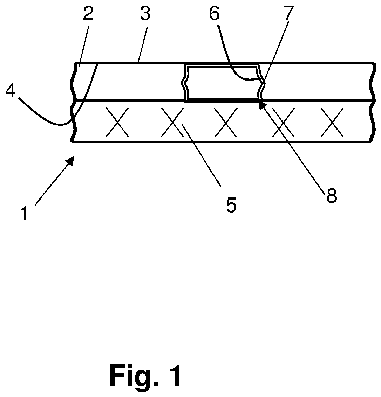

Fig. 1 zeigt eine Isolierverkleidung 1 zum thermischen Isolieren von Maschinen- oder Motorteilen. Die Isolierverkleidung 1 umfasst einen starren und metallischen Mantelkörper 2 mit einer äußeren Oberfläche 3 und einer inneren Oberfläche 4. Die Isolierverkleidung 1 umfasst weiter eine Isolierung 5, wobei die Isolierung 5 als flexible Matte oder flexible Lage oder flexible Stofflage ausgebildet ist. Die Isolierung 5 ist reversibel und zerstörungsfrei lösbar am Mantelkörper 2 befestigt.

Die innere Oberfläche 4 ist in einer entsprechenden Anordnung den Maschinen- oder Motorteilen zugewandt oder zuwendbar. Die Isolierung 5 ist der inneren Oberfläche 4 zugeordnet und liegt an der inneren Oberfläche 4 an.

Es ist kein Innenmantelkörper vorgesehen, der mit dem Mantelkörper 2 verbunden ist und die Isolierung 5 zwischen sich und dem Mantelkörper 2 einschließt und/ oder aufnimmt.

Der Mantelkörper 2 ist mit der Isolierung 5 formschlüssig verbunden. Am Mantelkörper 2 ist ein erstes Formschlussmittel 6 angeordnet und an der Isolierung 5 ist ein zweites Formschlussmittel 7 angeordnet, wobei das erste Formschlussmittel 6 und das zweite Formschlussmittel 7 mit einander einen reversibel lösbaren Formschluss eingehen.

Am Mantelkörper 2 ist als erstes Formschlussmittel 6 ein Unterteil eines Druckknopfs 8 angeordnet und an der Isolierung 5 ist als zweites Formschlussmittel 7 ein Oberteil des Druckknopfs 8 angeordnet, wobei das Oberteil mit dem Unterteil einen reversibel lösbaren Formschluss eingeht. Das Unterteil ragt von der inneren Oberfläche 4 des Mantelkörpers 2 ab.

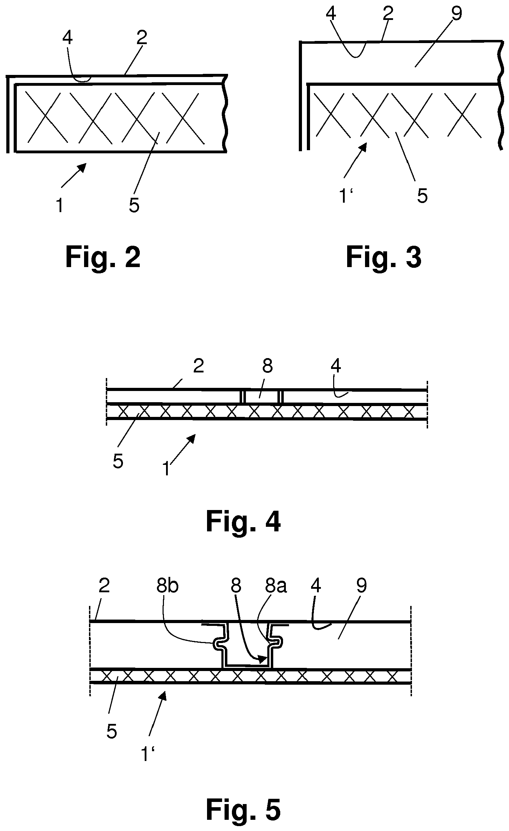

Fig. 2 zeigt eine schematische Ansicht der Isolierverkleidung 1, bei welcher als Isolierung 5 ein Isolierformteil oder Gewebelagen an der inneren Oberfläche 4 anliegt bzw. anliegen.

Fig. 3 zeigt eine schematische Ansicht einer Isolierverkleidung 1', bei welcher als Isolierung 5 ein Isolierformteil oder Gewebelagen von der inneren Oberfläche 4 bereichsweise beabstandet ist bzw. sind, um eine Be- und/ oder Entlüftungskammer oder ein ruhendes Luftpolster 9 zwischen dem Isolierformteil bzw. den Gewebelagen und der inneren Oberfläche 4 des Mantelkörpers 2 auszubilden. Zwischen der inneren Oberfläche 4 des Mantelkörpers 2 und der Isolierung 5 ist das Luftpolster 9 vorgesehen.

Fig. 4 zeigt eine schematische Ansicht der Isolierverkleidung 1, bei welcher die Isolierung 5 sehr eng an der inneren Oberfläche 4 anliegt und das Blech des Mantelkörpers 2 quasi mit der Isolierung 5 innen beschichtet.

Fig. 5 zeigt eine schematische Ansicht der Isolierverkleidung 1', bei welcher die Isolierung 5 von der inneren Oberfläche 4 um einen Spalt definierter Breite bereichsweise beabstandet ist, um ein Luftpolster 9 zwischen der Isolierung 5 und der inneren Oberfläche 4 auszubilden. Die Breite des Spalts kann durch Auslegung des Unterteils 8a oder Oberteils 8b des Druckknopfs 8 eingestellt werden. Insbesondere kann die Höhe des Unterteils 8a oder Oberteils 8b geeignet gewählt werden.

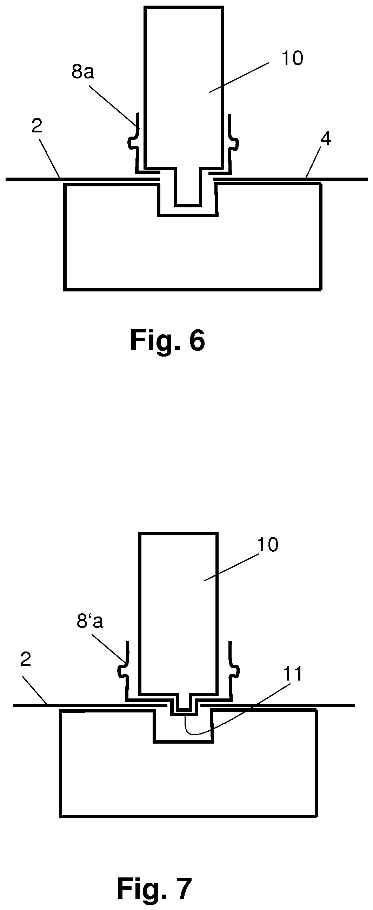

Fig. 6 zeigt eine schematische Ansicht eines Schritts eines Fertigungsverfahrens, insbesondere eines Punktschweißverfahrens, bei dem eine Zentrierung eines Unterteils 8a eines Druckknopfs am Mantelkörper 2 über einen Zentrierstift 10 erfolgt. Das Unterteil 8a ragt von der inneren Oberfläche 4 des Mantelkörpers 2 ab. Der Zentrierstift 10 durchgreift eine Ausnehmung im Boden des Unterteils 8a und greift zugleich in eine Ausnehmung im Mantelkörper 2, um die Zentrierung zu bewirken.

Das Unterteil 8a weist aufgrund der Ausnehmung einen Durchgang auf, durch den ein Schweißpunkt im Inneren des Unterteils 8a zur Verbindung mit der inneren Oberfläche 4 erzeugbar ist.

Fig. 7 zeigt eine schematische Ansicht eines Schritts eines Fertigungsverfahrens, insbesondere eines Punktschweißverfahrens, bei dem eine Zentrierung eines Unterteils 8'a eines Druckknopfs am Mantelkörper 2 über eine Zentrierwarze 11 am Unterteil 8'a des Druckknopfs erfolgt. Der Zentrierstift 10 greift in die Zentrierwarze 11 des Unterteils 8'a und zugleich in eine Ausnehmung im Mantelkörper 2, um die Zentrierung zu bewirken.

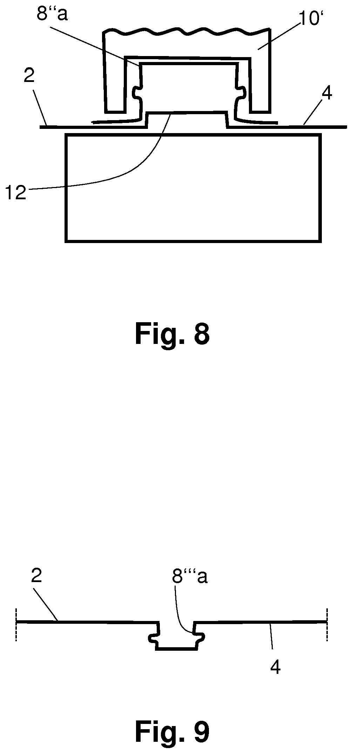

Fig. 8 zeigt eine schematische Ansicht eines Schritts eines Fertigungsverfahrens, insbesondere eines Punktschweißverfahrens, bei dem eine Zentrierung eines Unterteils 8"a eines Druckknopfs am Mantelkörper 2 über eine Zentrierwarze 12 am Mantelkörper 2 erfolgt. Ein Zentrierstift 10' übergreift das Unterteil 8"a und zugleich koaxial die Zentrierwarze 12 am Mantelkörper 2, um die Zentrierung zu bewirken. Das Unterteil 8"a des Druckknopfs könnte an den Mantelkörper 2, nämlich an dessen innere Oberfläche 4, angeschweißt sein. Das Unterteil 8"a weist bevorzugt einen radial und/ oder axial auskragenden Schweißsockel auf.

Fig. 9 zeigt eine schematische Ansicht eines Mantelkörpers 2, in den das Unterteil 8"'a eines Druckknopfs mittels einer Umformvorrichtung eingeformt bzw. eingedrückt ist. Das Unterteil 8"'a des Druckknopfs ist im Mantelkörper 2 ausgebildet, wobei das Unterteil 8"'a in den Mantelkörper 2 eingeprägt und eingeformt ist. Das Unterteil 8"'a ragt von der inneren Oberfläche 4 ab.

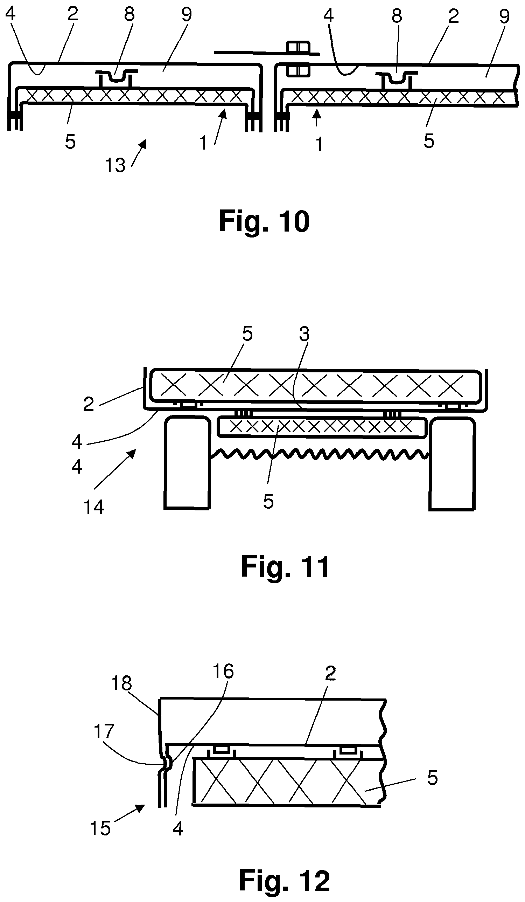

Fig. 10 zeigt eine schematische Ansicht einer Isolierkassette 13, bei welcher zwischen einer Isolierung 5 und den inneren Oberflächen 4 zweier Mantelkörper 2 jeweils Luftpolster 9 ausgebildet sind. Es sind zwei Isolierverkleidungen 1 nebeneinander angeordnet, um eine längliche Isolierkassette 13 auszubilden.

Fig. 11 zeigt eine schematische Ansicht einer Isolierkassette 14, bei welcher an einem Mantelkörper 2 sowohl an der inneren Oberfläche 4 als auch an der äußeren Oberfläche 3 jeweils eine Isolierung 5 reversibel und zerstörungsfrei befestigt ist. Der äußeren Oberfläche 3 ist eine Isolierung 5 zumindest abschnittsweise oder bereichsweise zugeordnet, und die Isolierung 5 liegt zumindest abschnittsweise oder bereichsweise an der äußeren Oberfläche 3 an. Der inneren Oberfläche 4 ist ebenfalls eine Isolierung 5 zumindest abschnittsweise oder bereichsweise zugeordnet, und die Isolierung 5 liegt zumindest abschnittsweise oder bereichsweise auch an der inneren Oberfläche 4 an.

Fig. 12 zeigt eine schematische Ansicht einer Anordnung 15, bei welcher der Mantelkörper 2 als Zwischenblech dient und an seiner inneren Oberfläche 4 mit einer Isolierung 5 verbunden ist. Der Mantelkörper 2 steht durch eine eingewölbte Sicke 16 mit einer ausgewölbten Sicke 17 eines Außenkörpers 18 in Formschluss. Der Mantelkörper 2 weist eine Seitenwand auf, welche orthogonal zur inneren Oberfläche 4 orientiert ist und in welcher die eingewölbte Sicke 16 ausgebildet ist.

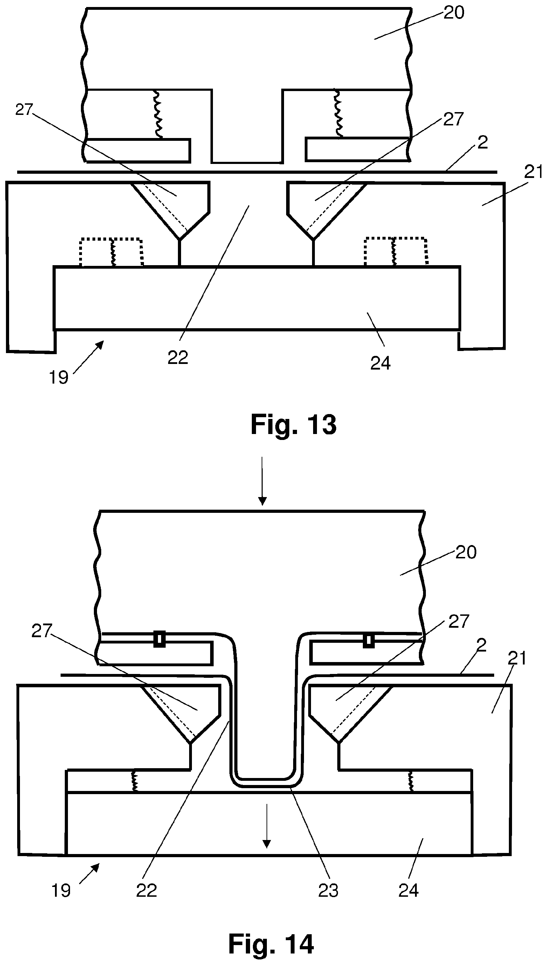

Fig. 13 zeigt anhand einer Umformvorrichtung 19 eine schematische Ansicht eines Schritts eines Fertigungsverfahrens, bei dem ein Mantelkörper 2 zwischen einen Stempel 20 und einen oberen Tisch 21 der Umformvorrichtung 19 gelegt ist.

Fig. 14 zeigt eine schematische Ansicht eines weiteren Schritts des Fertigungsverfahrens, bei dem der Mantelkörper 2 gemäß Fig. 13 durch den Stempel 20 in eine Ausnehmung 22 des oberen Tischs 21 gepresst und dadurch so verformt wird, dass dieser eine topfartige Vertiefung 23 aufweist.

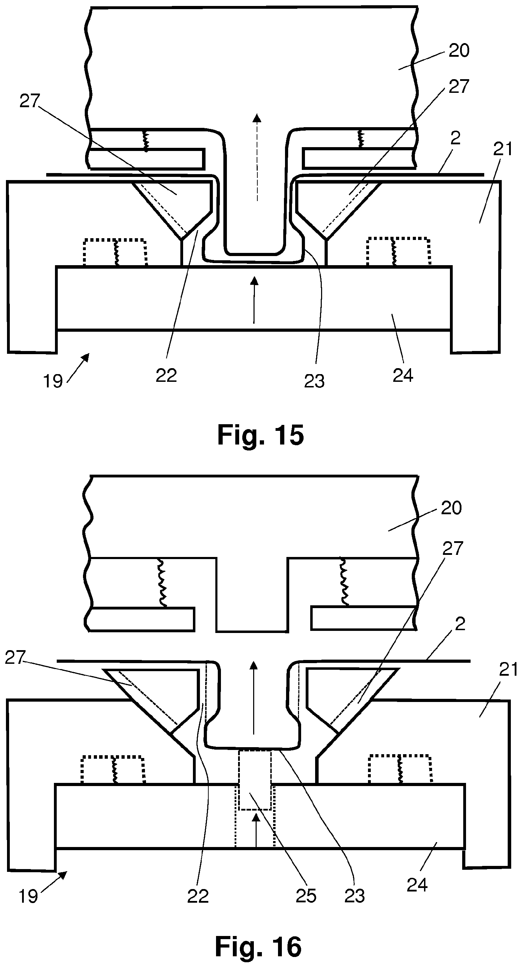

Fig. 15 zeigt eine schematische Ansicht eines weiteren Schritts des Fertigungsverfahrens, bei dem die topfartige Vertiefung 23 des Mantelkörpers 2 gemäß Fig. 14 durch Gegenformen eines unteren Tischs 24 an ihrem unteren Ende lateral aufgeweitet wird. Das Gegenformen kann unter Ausbildung einer Federkraft erfolgen. Der untere Tisch 24 wird nach oben, nämlich gegen die topfartige Vertiefung 23 verfahren, um diese aufzuweiten.

Fig. 16 zeigt eine schematische Ansicht eines weiteren Schritts des Fertigungsverfahrens, bei dem der Mantelkörper 2 gemäß Fig. 15 aus dem oberen Tisch 21 durch Vergrößern der Ausnehmung 22 des oberen Tischs 21 unter Zuhilfenahme eines Auswerfers 25 im unteren Tisch 24 entnommen wird. Der stiftartige Auswerfer 25 wird relativ zum unteren Tisch 24 nach oben verfahren, um den Mantelkörper 2 auszudrücken.

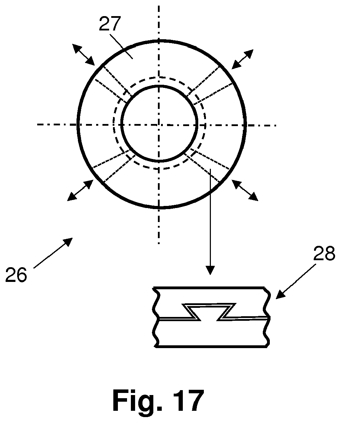

Fig. 17 zeigt eine Draufsicht auf einen Ausformring 26 des oberen Tischs 21 gemäß Fig. 16, bei dem Kreissegmente 27 nach oben verfahrbar sind, um die kreisförmige Ausnehmung 22 im oberen Tisch 21 zu vergrößern, wobei die Kreissegmente 27 durch eine Schwalbenschwanzführung 28 relativ zum oberen Tisch 21 geführt sind, die ausschnittsweise im unteren Teil der Fig. 17 dargestellt ist.

Die Fig. 13 bis 16 zeigen schematisch ein Verfahren zur Herstellung einer Isolierverkleidung 1 der hier beschriebenen Art, umfassend die nachfolgenden Schritte:
- Bereitstellen einer metallischen Lage zur Fertigung des Mantelkörpers 2,
- Eindrücken eines Stempels 20 in die äußere Oberfläche 3 des Mantelkörpers 2 um durch Tiefziehen eine Struktur in den Mantelkörper 2 einzuprägen, die einen Formschluss herstellen kann. Die Struktur ist als Unterteil eines Druckknopfs ausgebildet, welches von der inneren Oberfläche 4 abragt.

### Bezugszeichen

- 1, 1': Isolierverkleidung
- 2: Mantelkörper
- 3: äußere Oberfläche von 2
- 4: innere Oberfläche von 2
- 5: Isolierung
- 6: erstes Formschlussmittel
- 7: zweites Formschlussmittel
- 8: Druckknopf
- 8a, 8'a, 8"a, 8"'a: Unterteil
- 8b: Oberteil
- 9: Luftpolster
- 10, 10': Zentrierstift
- 11: Zentrierwarze von 8'a
- 12: Zentrierwarze von 2
- 13: Isolierkassette, länglich
- 14: Isolierkassette
- 15: Anordnung
- 16: eingewölbte Sicke von 2
- 17: ausgewölbte Sicke von 18
- 18: Außenkörper von 15
- 19: Umformvorrichtung
- 20: Stempel
- 21: oberer Tisch
- 22: Ausnehmung von 21
- 23: topfartige Vertiefung
- 24: unterer Tisch
- 25: Auswerfer von 24
- 26: Ausformring
- 27: Kreissegment von 26
- 28: Schwalbenschwanzführung

## Patentansprüche

1. Isolierverkleidung (1, 1') zum thermischen Isolieren von Maschinen- oder Motorteilen, umfassend einen starren und/ oder metallischen Mantelkörper (2) mit einer äußeren Oberfläche (3) und einer inneren Oberfläche (4) und einer Isolierung (5), wobei die Isolierung (5) als flexible Matte oder flexible Lage ausgebildet ist und wobei die Isolierung (5) reversibel und/ oder zerstörungsfrei lösbar am Mantelkörper (2) befestigt ist,
**dadurch gekennzeichnet, dass** am oder im Mantelkörper (2) ein Unterteil (8a, 8'a, 8"a, 8"'a) oder ein Oberteil (8b) eines Druckknopfs (8) angeordnet ist und dass an der Isolierung (5) ein Oberteil (8b) oder ein Unterteil (8a, 8'a, 8"a, 8"'a) eines Druckknopfs (8) angeordnet ist, wobei ein Oberteil (8b) mit einem Unterteil (8a, 8'a, 8"a, 8"'a) einen reversibel lösbaren Formschluss eingeht.

2. Isolierverkleidung nach Anspruch 1, **dadurch gekennzeichnet, dass** kein Innenmantelkörper vorgesehen ist, der mit dem Mantelkörper (2) verbunden ist und die Isolierung (5) zwischen sich und dem Mantelkörper (2) einschließt und/ oder aufnimmt.

3. Isolierverkleidung nach Anspruch 1 oder 2, **dadurch gekennzeichnet, dass** der inneren Oberfläche (4) und/ oder der äußeren Oberfläche (3) zumindest jeweils eine Isolierung (5) zumindest abschnittsweise oder bereichsweise zugeordnet ist und/ oder dass zumindest jeweils eine Isolierung (5) zumindest abschnittsweise oder bereichsweise an der inneren Oberfläche (4) und/ oder der äußeren Oberfläche (3) anliegt.

4. Isolierverkleidung nach einem der voranstehenden Ansprüche, **dadurch gekennzeichnet, dass** der Mantelkörper (2) mit der Isolierung (5) formschlüssig und/ oder kraftschlüssig verbindbar ist.

5. Isolierverkleidung nach einem der voranstehenden Ansprüche, **dadurch gekennzeichnet, dass** am oder im Mantelkörper (2) ein erstes Formschlussmittel (6) angeordnet ist und dass an der Isolierung (5) ein zweites Formschlussmittel (7) angeordnet ist, wobei das erste Formschlussmittel (6) und das zweite Formschlussmittel (7) mit einander einen reversibel lösbaren Formschluss eingehen.

6. Isolierverkleidung nach einem der voranstehenden Ansprüche, **dadurch gekennzeichnet, dass** ein Unterteil (8a, 8'a, 8"a, 8'''a) oder ein Oberteil (8b) des Druckknopfs (8) im Mantelkörper (2) ausgebildet ist, wobei das Unterteil (8a, 8'a, 8"a, 8"'a) oder das Oberteil (8b) in den Mantelkörper (2) eingeprägt und/ oder eingeformt ist.

7. Isolierverkleidung nach einem der voranstehenden Ansprüche, **dadurch gekennzeichnet, dass** ein Unterteil (8a, 8'a, 8"a, 8"'a) oder ein Oberteil (8b) des Druckknopfs (8) an den Mantelkörper (2), nämlich an dessen innere Oberfläche (4) und/ oder an dessen äußere Oberfläche (3), angeschweißt ist.

8. Isolierverkleidung nach Anspruch 7, **dadurch gekennzeichnet, dass** das Unterteil (8a, 8'a, 8"a, 8"'a) oder das Oberteil (8b) einen radial und/ oder axial auskragenden Schweißsockel aufweist und/ oder dass das Unterteil (8a, 8'a, 8"a, 8"'a) oder das Oberteil (8b) einen Durchgang aufweist, durch den ein Schweißpunkt im Inneren des Unterteils (8a, 8'a, 8"a, 8"'a) oder Oberteils (8b) zur Verbindung mit der inneren Oberfläche (4) und/ oder äußeren Oberfläche (3) erzeugbar ist.

9. Isolierverkleidung nach einem der voranstehenden Ansprüche, **dadurch gekennzeichnet, dass** zwischen der inneren Oberfläche (4) und/ oder der äußeren Oberfläche (3) des Mantelkörpers (2) und der Isolierung (5) eine Be- und/ oder Entlüftungskammer oder ein Luftpolster (9) vorgesehen ist.

10. Anordnung, umfassend eine Isolierverkleidung (1, 1') nach einem der voranstehenden Ansprüche und mindestens ein zu isolierendes Maschinen- oder Motorteil, wobei die innere Oberfläche (4) und eine dieser zugeordnete Isolierung (5) dem Maschinen- oder Motorteil zugewandt ist und wobei die äußere Oberfläche (3) dem Maschinen- oder Motorteil abgewandt ist.

11. Verfahren zur Herstellung einer Isolierverkleidung (1, 1') nach einem der Ansprüche 1 bis 9, umfassend die nachfolgenden Schritte:
- Bereitstellen einer metallischen Lage zur Fertigung des Mantelkörpers (2).
- Eindrücken eines Stempels (20) in die innere und/ oder äußere Oberfläche (4, 3) des Mantelkörpers (2) um durch Tiefziehen eine Struktur in den Mantelkörper (2) einzuprägen, die einen Formschluss herstellen kann oder
- Anschweißen eines Unterteils (8a, 8'a, 8"a, 8"'a) oder Oberteils (8b) eines Druckknopfs (8) an die innere und/ oder äußere Oberfläche (4, 3) des Mantelkörpers (2).

## Claims

1. Insulating cladding (1, 1') for thermally insulating machine or engine parts, comprising a rigid and/or metallic shell body (2) with an outer surface (3) and an inner surface (4) and an insulation (5), the insulation (5) being formed as a flexible mat or flexible layer and the insulation (5) being reversibly and/or non-destructively detachably fastened on the shell body (2),
**characterized in that** a lower part (8a, 8'a, 8" a, 8"'a) or an upper part (8b) of a pushbutton (8) is arranged on or in the shell body (2) and **in that** an upper part (8b) or a lower part (8a, 8'a, 8"a, 8'"a) of a pushbutton (8) is arranged on the insulation (5), an upper part (8b) entering into a reversibly releasable form-fitting engagement with a lower part (8a, 8'a, 8"a, 8'"a).

2. Insulating cladding according to Claim 1, **characterized in that** no inner shell body that is connected to the shell body (2) and encloses and/or receives the insulation (5) between itself and the shell body (2) is provided.

3. Insulating cladding according to Claim 1 or 2, **characterized in that** the inner surface (4) and/or the outer surface (3) is assigned at least in each case an insulation (5), at least in certain portions or certain regions, and/or **in that** at least in each case an insulation (5) lies against the inner surface (4) and/or the outer surface (3), at least in certain portions or certain regions.

4. Insulating cladding according to one of the preceding claims, **characterized in that** the shell body (2) can be connected to the insulation (5) in form-fitting and/or force-fitting engagement.

5. Insulating cladding according to one of the preceding claims, **characterized in that** a first form-fitting means (6) is arranged on or in the shell body (2) and **in that** a second form-fitting means (7) is arranged on the insulation (5), the first form-fitting means (6) and the second form-fitting means (7) entering into a reversibly releasable form-fitting engagement with one another.

6. Insulating cladding according to one of the preceding claims, **characterized in that** a lower part (8a, 8'a, 8"a, 8'"a) or an upper part (8b) of the pushbutton (8) is formed in the shell body (2), the lower part (8a, 8'a, 8"a, 8'"a) or the upper part (8b) being stamped and/or moulded into the shell body (2).

7. Insulating cladding according to one of the preceding claims, **characterized in that** a lower part (8a, 8'a, 8"a, 8'"a) or an upper part (8b) of the pushbutton (8) is welded onto the shell body (2), to be specific on the inner surface (4) thereof and/or on the outer surface (3) thereof.

8. Insulating cladding according to Claim 7, **characterized in that** the lower part (8a, 8'a, 8"a, 8'"a) or the upper part (8b) has a radially and/or axially projecting welding base and/or **in that** the lower part (8a, 8'a, 8"a, 8'''a) or the upper part (8b) has a passage, through which a welding location can be produced in the interior of the lower part (8a, 8'a, 8"a, 8'"a) or upper part (8b) for connection to the inner surface (4) and/or outer surface (3).

9. Insulating cladding according to one of the preceding claims, **characterized in that** an aerating and/or venting chamber or an air cushion (9) is provided between the inner surface (4) and/or the outer surface (3) of the shell body (2) and the insulation (5) .

10. Arrangement, comprising an insulating cladding (1,1') according to one of the preceding claims and at least one machine or engine part to be insulated, the inner surface (4) and an insulation (5) assigned to it facing the machine or engine part, and the outer surface (3) facing away from the machine or engine part.

11. Method for producing an insulating cladding (1,1') according to one of Claims 1 to 9, comprising the following steps:
- providing a metallic layer for producing the shell body (2),
- pressing a die (20) into the inner and/or outer surface (4, 3) of the shell body (2) in order by deep drawing to stamp into the shell body (2) a structure that can establish a form-fitting engagement or
- welding a lower part (8a, 8'a, 8"a, 8'"a) or upper part (8b) of a pushbutton (8) onto the inner and/or outer surface (4, 3) of the shell body (2).

## Revendications

1. Revêtement isolant (1, 1') pour l'isolation thermique de pièces de machines ou de moteurs, comprenant un corps d'enveloppe rigide et/ou métallique (2) avec une surface extérieure (3) et une surface intérieure (4) et une isolation (5), l'isolation (5) étant réalisée sous forme de mat flexible ou de couche flexible et l'isolation (5) étant fixée de manière réversible et/ou sans destruction de manière amovible sur le corps d'enveloppe (2),
**caractérisé en ce qu'**une partie inférieure (8a, 8'a, 8"a, 8'"a) ou une partie supérieure (8b) d'un bouton poussoir (8) est disposée sur ou dans le corps d'enveloppe (2) et **en ce qu'**une partie supérieure (8b) ou une partie inférieure (8a, 8'a, 8"a, 8'"a) d'un bouton poussoir (8) est disposée sur l'isolation (5), une partie supérieure (8b) avec une partie inférieure (8a, 8'a, 8"a, 8'"a) réalisant un engagement par correspondance de formes amovible de manière réversible.

2. Revêtement isolant selon la revendication 1, **caractérisé en ce qu'**il n'est prévu aucun corps d'enveloppe intérieur qui soit connecté au corps d'enveloppe (2) et qui renferme et/ou reçoive l'isolation (5) entre lui et le corps d'enveloppe (2) .

3. Revêtement isolant selon la revendication 1 ou 2, **caractérisé en ce qu'**à la surface intérieure (4) et/ou à la surface extérieure (3) est associée au moins à chaque fois une isolation (5) au moins en partie ou par portions et/ou **en ce qu'**au moins à chaque fois une isolation (5) s'applique au moins en partie ou par portions sur la surface intérieure (4) et/ou sur la surface extérieure (3) .

4. Revêtement isolant selon l'une quelconque des revendications précédentes, **caractérisé en ce que** le corps d'enveloppe (2) peut être connecté par engagement par correspondance de formes et/ou par force avec l'isolation (5).

5. Revêtement isolant selon l'une quelconque des revendications précédentes, **caractérisé en ce qu'**un premier moyen d'engagement par correspondance de formes (6) est disposé sur ou dans le corps d'enveloppe (2) et **en ce qu'**un deuxième moyen d'engagement par correspondance de formes (7) est disposé sur l'isolation (5), le premier moyen d'engagement par correspondance de formes (6) et le deuxième moyen d'engagement par correspondance de formes (7) formant l'un avec l'autre un engagement par correspondance de formes amovible de manière réversible.

6. Revêtement isolant selon l'une quelconque des revendications précédentes, **caractérisé en ce qu'**une partie inférieure (8a, 8'a, 8"a, 8'"a) ou une partie supérieure (8b) du bouton-poussoir (8) est réalisée dans le corps d'enveloppe (2), la partie inférieure (8a, 8'a, 8"a, 8'"a) ou la partie supérieure (8b) étant matricée et/ou formée dans le corps d'enveloppe (2).

7. Revêtement isolant selon l'une quelconque des revendications précédentes, **caractérisé en ce qu'**une partie inférieure (8a, 8'a, 8"a, 8'"a) ou une partie supérieure (8b) du bouton-poussoir (8) est soudée sur le corps d'enveloppe (2), à savoir au niveau de sa surface intérieure (4) et/ou de sa surface extérieure (3).

8. Revêtement isolant selon la revendication 7, **caractérisé en ce que** la partie inférieure (8a, 8'a, 8"a, 8'"a) ou la partie supérieure (8b) présente un socle de soudage saillant radialement et/ou axialement et/ou **en ce que** la partie inférieure (8a, 8'a, 8"a, 8'"a) ou la partie supérieure (8b) présente un passage à travers lequel un point de soudure peut être produit à l'intérieur de la partie inférieure (8a, 8'a, 8"a, 8'"a) ou de la partie supérieure (8b) pour la connexion à la surface intérieure (4) et/ou à la surface extérieure (3).

9. Revêtement isolant selon l'une quelconque des revendications précédentes, **caractérisé en ce qu'**entre la surface intérieure (4) et/ou la surface extérieure (3) du corps d'enveloppe (2) et de l'isolation (5) est prévu(e) une chambre de ventilation et/ou de désaérage ou un coussin d'air (9) .

10. Agencement comprenant un revêtement isolant (1, 1') selon l'une quelconque des revendications précédentes et au moins une pièce de machine ou de moteur à isoler, la surface intérieure (4) et une isolation (5) associée à celle-ci étant tournées vers la pièce de machine ou de moteur, et la surface extérieure (3) étant opposée à la pièce de machine ou de moteur.

11. Procédé de fabrication d'un revêtement isolant (1, 1') selon l'une quelconque des revendications 1 à 9, comprenant les étapes suivantes :
- fourniture d'une couche métallique pour la fabrication du corps d'enveloppe (2),
- enfoncement d'un poinçon (20) dans la surface intérieure et/ou extérieure (4, 3) du corps d'enveloppe (2) afin de matricer par emboutissage profond une structure dans le corps d'enveloppe (2), laquelle peut établir un engagement par correspondance de formes ou
- soudage d'une partie inférieure (8a, 8'a, 8"a, 8'"a) ou d'une partie supérieure (8b) d'un bouton-poussoir (8) au niveau de la surface intérieure et/ou extérieure (4, 3) du corps d'enveloppe (2).
